# EUROPEAN PATENT APPLICATION

(11) **EP 3 000 332 A1**
(43) Date of publication of application: **30.03.2016**
(21) Application number: 15154771.8
(22) Date of filing: 11.02.2015
(51) Int. Cl.: A23L 3/36, A23B 4/06, F25D 3/11, F25D 13/06, G01K 13/06, G01K 17/00, A23L 3/375, A22C 21/00, A23B 4/09

(54) **Apparatus and method for determining heat flux in an atmosphere of a freezer**

(30) Priority: 23.09.2014 US 201462054123 P
(71) Applicant: Linde Aktiengesellschaft, 80331 München (DE)
(72) Inventor: Handley, Simon James, Old Hutton, Kendal, Cumbria LA8 0NS (GB)
(74) Representative: Hofmann, Andreas

(57) **Abstract**

In order to overcome problems that earlier apparatus and methods have experienced, an apparatus (10) for determining heat flux in an atmosphere of a freezer is proposed, said apparatus (10) comprising:
- a housing (14) constructed to be transported by a conveyor (12) through the atmosphere;
- at least one heat source member (18) disposed at at least one surface (20) of the housing (14);
- at least one heat flux sensor (22) operatively associated with the at least one heat source member (18); and
- a self-contained power supply (26) mounted to the housing (14) for powering the at least one heat source member (18) and the at least one heat flux sensor (22).

A related method of measuring heat flux in an atmosphere of a freezer is also proposed.

## Description

### Technical field of the present invention

The present invention relates to an apparatus and to a method for determining or measuring heat flux, in particular for calibrating and setting heat flux control, for chilling or freezing equipment used in for example tunnel freezers and laboratories.

### Technological background of the present invention

Every product, food or otherwise, including every organism has a known rate of cooling. It is also known that for each of the foregoing there is one particular rate of cooling to achieve optimum destruction conditions or preservation of the organism.

An example of an organism, such as a bacteria, is campylobacter, and such may be found in food products, such as poultry or chicken, which can make a consumer of the food product terribly ill if this bacteria is ingested. Cooling or freezing the campylobacter, if done incorrectly, may only result in the bacteria being maintained in a frozen state, whereupon the occurrence of room or ambient temperature would revive the bacteria to their undesirable status.

### Disclosure of the present invention: object, solution, advantages

Starting from the above-explained disadvantages and inadequacies as well as taking the prior art as discussed into account, an object of the present invention is to overcome problems that earlier apparatus and methods have experienced. This object is accomplished by an apparatus comprising the features of claim 1 as well as by a method comprising the features of claim 9. Advantageous embodiments and expedient improvements of the present invention are disclosed in the respective dependent claims.

The present invention starts from the fact that using temperature to destroy bacteria is a sensitive and delicate operation because the bacteria will only be destroyed effectively and efficiently in a very narrow, effective cooling range.

Therefore, in order to effectively and efficiently destroy bacteria, for example campylobacter bacteria, it is necessary to expose same for a select period of time to a chilling atmosphere so that the bacteria is destroyed with an economical use of the destruction material or medium being employed to render the destruction.

To do so, the environment in which the bacteria is to be exposed is to be understood and controlled so that the aforementioned effective and efficient destruction of the bacteria can be obtained.

The present invention basically provides for a heat flux test apparatus and method, and more specifically for a heat flux test instrument (HFTI) apparatus and method for use in, for example, chilling tunnels of food processing plants to destroy bacteria, in particular campylobacter, and similarly preserve the food product without damaging the cellular structure of same.

Data is gathered from within the heat flux tunnel to enable accurate mapping of heat transfer within the tunnel, as well as a temperature profile of the product being chilled or frozen. The data is displayed in real time, as the apparatus passes through the tunnel; data can be displayed in both numeric and graphical representation and stored for example in csv (comma-separated value) format.

The tunnel allows accurate modeling of the tunnel atmosphere and environment. Using the visual representation from the data, engineers and tunnel operators are able to fine tune or adjust the tunnel to allow it to maximize heat transfer. The tunnel can be set up to provide the same cooling rates as that of the organism or product to be frozen or chilled by utilizing the HFTI.

There is therefore provided an apparatus embodiment for determining heat flux in an atmosphere of a freezer, comprising: a housing constructed to be transported by a conveyor through the atmosphere; at least one heat source member disposed at at least one surface of the housing; at least one heat flux sensor operatively associated with the at least one heat source member; and a self-contained power supply mounted to the housing for powering the at least one heat source member and the at least one heat flux sensor.

According to an advantageous embodiment of the present invention, the housing may be supported for transport on the conveyor by at least one mechanical fastener, in particular by at least one strap, providing for releasable engagement to the conveyor.

In particular, the apparatus may use an array or plurality of heat flux sensors mounted to a small heater to provide regulated heat.

The apparatus can be powered by the self-contained power source, such as for example at least one rechargeable NiC(a)d (nickel-cadmium) battery pack, for heaters, heat flux sensors, wireless connection, software, indicators and a digital storage system.

There is also provided a method embodiment of measuring heat flux in an atmosphere of a freezer, comprising: supporting at least one heat flux sensor on at least one heat source member; self-contained powering of the at least one heat flux sensor and the at least one heat source member; conveying the at least one heat source member through the atmosphere within the freezer; and generating a signal representing an amount of energy transfer occurring at the at least one heat flux sensor.

In an expedient embodiment of the present invention, the supporting may comprise a housing for the conveying.

In particular, there may be assigning an identification and a position for each of the at least one heat flux sensor during the supporting, and mapping cryogen presence in the atmosphere.

According to a favoured embodiment of the present invention, the method may further comprise evaluating the amount of energy transfer occurring for determining if conditions of the atmosphere will destroy microorganisms, in particular campylobacter.

The cryogen, in particular cold liquid nitrogen (LIN), would contact the heat flux (HF) sensors at various velocity and impingement angles. The HF sensors would respond by providing a negative mV (milli volt) signal as energy is drawn away from the sensor and heater element.

This would be directly proportional to energy transfer units W/m², i. e. watts per square meter and thus, be able to provide an accurate detail of liquid nitrogen (LIN) jet positioning, angles, number of jets, LIN coverage in the tunnel, and LIN pressure.

This information is transmitted as numerical values in energy (W/m²) and graphical and so as to provide the cooling curve for the tunnel freezer. This information is superimposed on the cooling curve template for the microorganisms or food, and the tunnel would be adjusted to match the cooling curve template.

There may also be provided a transmitter mounted to the housing and powered by the self-contained power supply for transmitting a signal from the at least one heat flux sensor to a remote location for evaluation and mapping of the heat flux in the freezer, in particular for receiving and evaluating data in said signal and for mapping a profile of the heat flux responsive to data received from the signal.

Correspondingly, there may also be provided a method of transmitting, in particular of wireless transmitting, a signal from the at least one heat flux sensor to a remote location for evaluation and mapping of the heat flux in the freezer, in particular for receiving and evaluating data in said signal and for mapping a profile of the heat flux responsive to data received from the signal.

In a preferred embodiment of the present invention, a digital storage system, in particular comprising a computer, for example a laptop or a notebook or a tablet, or a smartphone, may be in communication with the transmitter for receiving the signal therefrom.

The present apparatus and method embodiments provide for:
- mapping of heat transfer in for example tunnel freezers, laboratory equipment and settings, and mapping of a related temperature profiles in such equipment;
- an operator to establish a freezer tunnel set up for a cooling curve of a microorganism or food product to be processed in the equipment;

- reducing damage to laboratory specimens or food products when frozen or chilled in chilling equipment;
- reduced cost to freeze or chill products or microorganisms;
- reduced risk of spoilage by microbial, chemical and mechanical damage;
- improved control over tunnel freezer systems;
- use or optimization of freezing, chilling or destroying as necessary microbial organisms such as for example campylobacter.

In particular, the apparatus according to the present invention and/or the method according to the present invention may be used in destroying bacteria or microorganisms, in particular comprising campylobacter, on a product, in particular selected from the group consisting of a food product or a carcass, for example a poultry carcass or a chicken carcass, or a combination of food products and carcasses.

Chemical and other industries which require ascertaining precise cooling rates and temperature profiles would also be able to use the apparatus and method embodiments discussed herein.

Similarly, the biomedical industry which also requires ascertaining precise cooling rates would benefit from the present apparatus and method embodiments.

### Brief description of the drawings

For a more complete understanding of the present embodiment disclosures and as already discussed above, there are several options to embody as well as to improve the teaching of the present invention in an advantageous manner. To this aim, reference may be made to the claims dependent on claim 1 as well as on claim 9; further improvements, features and advantages of the present invention are explained below in more detail with reference to particular and preferred embodiments by way of nonlimiting example and to the appended drawing figures taken in conjunction with the following description of the embodiments, of which:
- FIG. 1: shows a heat flux test instrument embodiment according to the present invention for use in for example a tunnel freezer, said embodiment working according to the method of the present invention;
- FIG. 2: shows a front plan view of the embodiment in FIG. 1;
- FIG. 3: shows a circuit diagram of the embodiment in FIG. 1; and
- FIG. 4: shows a schematic of a wireless link from the embodiment of FIG. 1 to a computer or laptop display station.

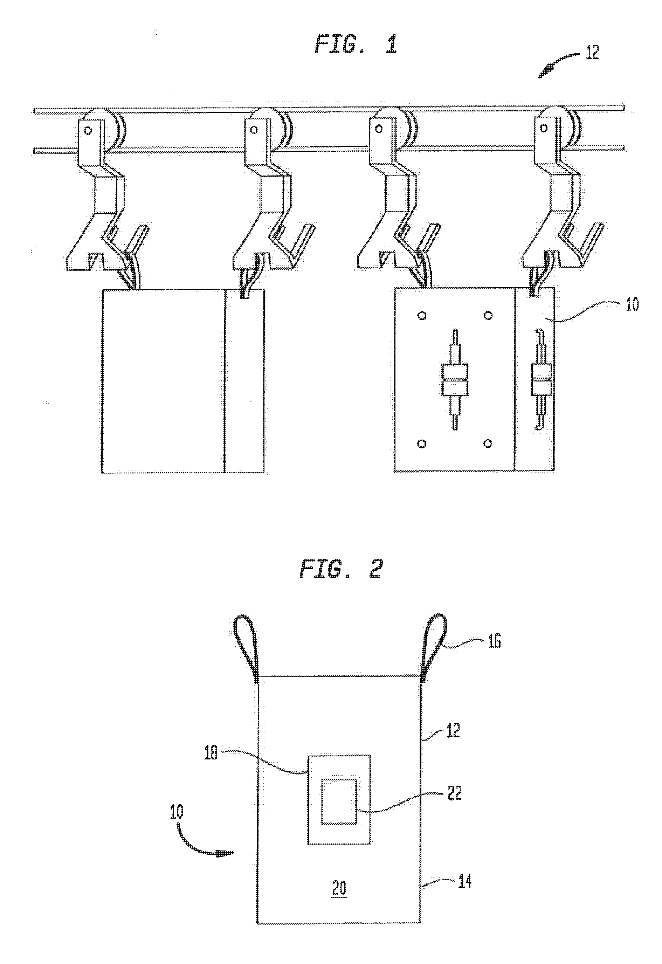

In the appended drawing figures, like equipment is labelled with the same reference numerals throughout the description of FIG. 1 to FIG. 4.

### Detailed description of the drawings; best way of embodying the present invention

Before explaining the present inventive embodiments in detail, it is to be understood that the embodiments are not limited in their application to the details of construction and arrangement of parts illustrated in the accompanying drawings, since the invention is capable of other embodiments and of being practiced or carried out in various ways. Also, it is to be understood that the phraseology or terminology employed herein is for the purpose of description and not of limitation.

For purposes of the embodiments, a cryogen substance, for example liquid nitrogen (LIN), herein refers to that which has a temperature less than -80°F (-62°C).

Heat flux or thermal flux is the rate of heat, energy transfer through a given surface. The SI (international system of units) derived unit of heat rate is joule/second, or watt. Heat flux is the heat rate per unit area, i. e. watts per square meter or W/m². The measurement of heat flux is most often done by measuring a temperature difference over a piece of material with known thermal conductivity.

Referring to FIG. 1 and to FIG. 2 a heat flux test instrument embodiment is showing generally at 10 constructed for transport by a conveyor apparatus or transport system 12. The apparatus 10 can be transported by the conveyor 12 into for example a tunnel freezer (not shown) for heat flux mapping of same.

The apparatus 10 comprises, in particular consists of, a housing 14 or enclosure which can be supported for transport on the conveyor 12 by straps 16 or other types of mechanical fasteners which provide for releasable engagement to the conveyor. The straps 16 for this embodiment are mounted to the housing 14 as shown in FIG. 2.

The housing 14 of the apparatus 10 includes at least one cartridge-like heater element 18 mounted on a surface 20 of the housing 14, such surface 20 being constructed of stainless steel or other material sufficient to withstand the extremes of cryogenic temperatures.

The housing 14 may be constructed of polycarbonate, stainless steel, a combination of polycarbonate and stainless steel, or an alloy comprising stainless steel.

At least one heat flux (HF) sensor 22 is mounted to the heater element 18 for exposure to atmosphere to be mapped. The apparatus 10 is self-contained, i. e. it is powered by a self-contained rechargeable power source, such as for example a NiC(a)d (nickel-cadmium) battery pack, which provides power for the heater, heat flux sensors, wireless connection, software, indicators and a digital storage system such as a small USB (universal serial bus) drive as discussed hereinafter.

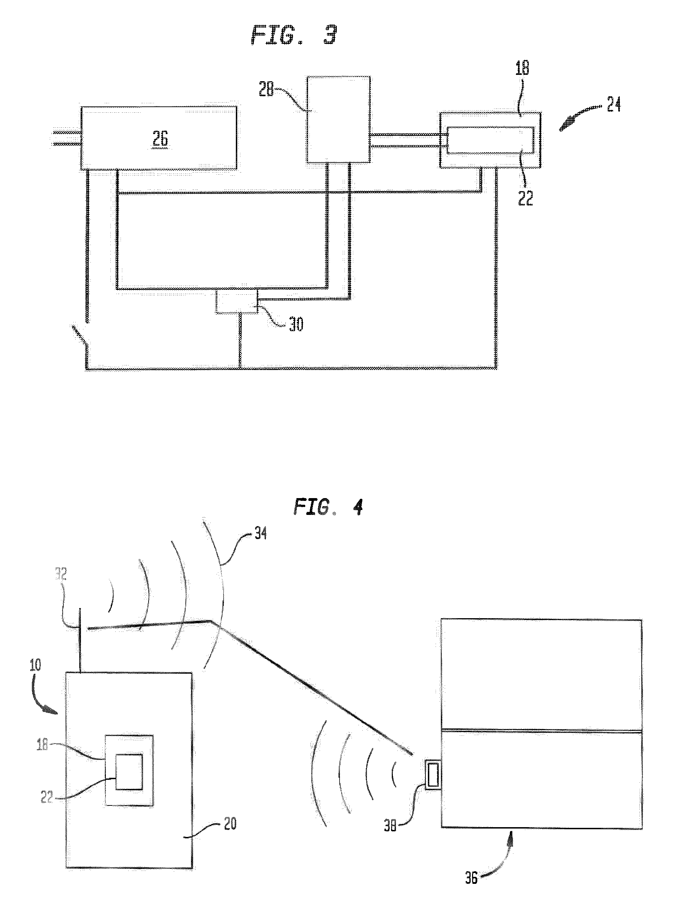

In FIG. 3 there is a circuit diagram of the apparatus 10 show generally at 24. A battery 26 provides power for a wireless transmitter 28, the heater element 18 and the HF sensor 22. A converter 30 interconnects the battery 26 with the wireless transmitter 28. The heater 18 and the HF sensor 22 are for providing the necessary voltage to such elements.

The HF sensor 22 is connected or wired to the transmitter 28 which accordingly can provide wireless signals to a remote location such as for example a computer or a laptop base station shown for example in FIG. 4.

In FIG. 4, there is shown communication between the apparatus 10 and a display in real time for the heat flux mapping that occurs in for example a tunnel freezer.

The apparatus 10 may also include an antenna 32 for transmitting a wireless signal 34 tied to a computer 36 such as for example a laptop.

Data is transmitted from the apparatus 10 to the computer 36, whereas data received by an antenna 38 of the computer 36 for display in real time and storage for subsequent review and evaluation of mapping that occurs in the environment in which the apparatus 10 is disposed.

The wireless signal 34 is able to be transmitted over a range of for example one hundred meters, although components of the apparatus 10 and the computer 36 can be ingested to increase or decrease this range.

By the use of a plurality of the heat flux sensors 22 with the apparatus 10, a plurality of readings can be obtained as the cryogen, in particular liquid nitrogen (LIN), contacts each of the sensors 22. By allocating a specific identity to each one of the sensors 22 and a description (i. e. positioning on the apparatus 10) with the software of the computer 36, a user can easily identify areas of cryogen coverage and an amount of heat transfer in the tunnel freezer as the apparatus 10 passes through same.

For example, a plurality of the sides of the housing 14 may have at their respective exterior surfaces 20 a heater element 18 to each of which a heat flux sensor 22 may be mounted. The sensor(s) 22 therefore sense from different sides of the housing 14 correspondingly different interior regions of the freezer tunnel. This information is used to provide "mapping" of the heat flux profile of the freezer interior and also the cryogen spray in the tunnel.

By passing the apparatus 10 through the tunnel repetitively a plurality of readings can be taken and an accurate heat transfer mapping of an interior of the tunnel can be provided. The conveying 12 of the apparatus 10 can occur a plurality of times within a time period of from ten seconds to two hours.

The method of the present embodiments also provides for mapping a profile of the heat flux of the freezer or other equipment, or the product being frozen, responsive to data received from signals transmitted from the apparatus 10.

Additionally, the method provides for assigning an identification and a position for each of the at least one heat flux sensor during the transit of the apparatus 10 through the freezer tunnel or other equipment; and evaluating an amount of energy transfer which occurs so that it can be determined if conditions of the atmosphere in the tunnel freezer or other equipment are sufficient to destroy microorganisms in the tunnel freezer or on the product being conveyed therethrough. These microorganisms can include for example campylobacter.

It will be understood that the embodiments described herein are merely exemplary, and that one skilled in the art may make variations and modifications without departing from the spirit and scope of the invention. All such variations and modifications are intended to be included within the scope of the invention as described and claimed herein. Further, all embodiments disclosed are not necessarily in the alternative, as various embodiments of the invention may be combined to provide the desired result.

### List of reference numerals

- 10: apparatus, in particular heat flux test instrument (HFTI)
- 12: conveyor (apparatus) or transport system
- 14: housing or enclosure
- 16: mechanical fastener, in particular strap
- 18: heat source member or heater element, in particular cartridge-like heater element
- 20: surface, in particular exterior surface, of housing or enclosure 14
- 22: heat flux (HF) sensor
- 24: circuit diagram of apparatus 10
- 26: power source or power supply, in particular self-contained power supply, for example battery, such as rechargeable NiC(a)d (nickel-cadmium) battery pack
- 28: transmitter, in particular wireless transmitter
- 30: converter
- 32: antenna, in particular first antenna
- 34: wireless link or wireless signal
- 36: computer, in particular laptop or notebook or tablet, or smartphone
- 38: antenna, in particular second antenna

## Claims

1. An apparatus (10) for determining heat flux in an atmosphere of a freezer, comprising:
- a housing (14) constructed to be transported by a conveyor (12) through the atmosphere;
- at least one heat source member (18) disposed at at least one surface (20) of the housing (14);
- at least one heat flux sensor (22) operatively associated with the at least one heat source member (18); and
- a self-contained power supply (26) mounted to the housing (14) for powering the at least one heat source member (18) and the at least one heat flux sensor (22).

2. The apparatus according to claim 1, wherein the housing (14) is constructed of material selected from the group consisting of polycarbonate, stainless steel, a combination of polycarbonate and stainless steel, and an alloy comprising stainless steel.

3. The apparatus according to claim 1 or 2, wherein the housing (14) is supported for transport on the conveyor (12) by at least one mechanical fastener (16), in particular by at least one strap, providing for releasable engagement to the conveyor (12).

4. The apparatus according to at least one of claims 1 to 3, further comprising a transmitter (28) mounted to the housing (14) and powered by the self-contained power supply (26) for transmitting a signal from the at least one heat flux sensor (22) to a remote location for evaluation and mapping of the heat flux in the freezer.

5. The apparatus according to claim 4, further comprising a digital storage system in communication with the transmitter (28) for receiving the signal therefrom.

6. The apparatus according to claim 5, wherein the digital storage system comprises a computer (36), in particular a laptop or a notebook or a tablet, or a smartphone.

7. The apparatus according to at least one of claims 1 to 6, wherein the self-contained power supply (26) comprises at least one rechargeable nickel-cadmium battery pack.

8. A method of measuring heat flux in an atmosphere of a freezer, comprising:
- supporting at least one heat flux sensor (22) on at least one heat source member (18);
- self-contained powering (26) of the at least one heat flux sensor (22) and the at least one heat source member (18);
- conveying (12) the at least one heat source member (18) through the atmosphere within the freezer; and
- generating a signal representing an amount of energy transfer occurring at the at least one heat flux sensor (22).

9. The method according to claim 8, further comprising transmitting, in particular wireless transmitting, the signal to a remote location for receiving and evaluating data in said signal.

10. The method according to claim 8 or 9, further comprising mapping a profile of the heat flux responsive to data received from the signal.

11. The method according to at least one of claims 8 to 10, wherein the conveying (12) occurs a plurality of times within a time period of from ten seconds to two hours.

12. The method according to at least one of claims 8 to 11, wherein the supporting comprises a housing (14) for the conveying (12).

13. The method according to at least one of claims 8 to 12, further comprising assigning an identification and a position for each of the at least one heat flux sensor (22) during the supporting, and mapping cryogen presence in the atmosphere.

14. The method according to at least one of claims 8 to 13, further comprising evaluating the amount of energy transfer occurring for determining if conditions of the atmosphere will destroy microorganisms, in particular campylobacter.

15. Use of at least one apparatus (10) according to at least one of claims 1 to 7 and/or of the method according to at least one of claims 8 to 14 in destroying bacteria or microorganisms, in particular comprising campylobacter, on a product, in particular selected from the group consisting of a food product or a carcass, for example a poultry carcass or a chicken carcass, or a combination of food products and carcasses.
